# EUROPEAN PATENT SPECIFICATION

(11) **EP 3 225 426 B1**
(45) Date of publication and mention of the grant of the patent: **11.03.2020**
(21) Application number: 15863803.1
(22) Date of filing: 15.10.2015
(51) Int. Cl.: B60C 7/00, B60B 9/04

(54) **NON-PNEUMATIC TIRE**
LUFTLOSER REIFEN
PNEU NON PNEUMATIQUE

(30) Priority: 28.11.2014 JP 2014241128; 02.12.2014 JP 2014244403
(43) Date of publication of application: 04.10.2017
(73) Proprietor: Bridgestone Corporation, Tokyo 104-8340 (JP)
(72) Inventor: TAKAHASHI, Narumi, Tokyo 104-8340 (JP); ABE, Akihiko, Tokyo 104-8340 (JP)
(74) Representative: Oxley, Robin John George
(86) International application number: PCT/JP2015/079221
(87) International publication number: WO 2016/084512

(56) References cited:
- EP-A1- 3 069 897
- WO-A1-2010/012091
- WO-A1-2013/152067
- WO-A1-2013/152067
- JP-A- 2014 083 871
- JP-A- 2014 083 871
- JP-A- 2014 088 144
- JP-A- 2014 118 116
- US-A1- 2014 062 168

## Description

### [Technical Field]

The present invention relates to a non-pneumatic tire in which filling of pressurized air is not necessary, when in use.

### [Background Art]

In conventional pneumatic tires in which pressurized air is filled and used, occurrence of a flat tire is an inevitable problem from a structural perspective.

To resolve such a problem, in recent years, a non-pneumatic tire including an attachment body attached to an axle, an outer cylindrical body which surrounds the attachment body from the outside in the tire radial direction, and a coupling member which displaceably couples the attachment body and the outer cylindrical body has been proposed as described in Patent Document 1 below, for example.

### [Citation List]

### [Patent Document]

### [Patent Document 1]

Japanese Unexamined Patent Application, First Publication No. 2011-156905

Reference is also made to WO 2013/152067, which discloses a non-pneumatic tire according to the preamble of Claim 1.

### [Summary of Invention]

### [Technical Problem]

However, in a conventional non-pneumatic tire, there is room for improvement in terms of reducing the weight while a decrease in strength of the coupling member is suppressed.

In consideration of the above-described circumstances, the present invention is directed to providing a non-pneumatic tire in which the weight thereof is able to be reduced while a decrease in strength of the coupling member is suppressed.

### [Solution to Problem]

A non-pneumatic tire according to the present invention includes an attachment body attached to an axle; an exterior body which is externally fitted to the attachment bodya ring-shaped body which surrounds the exterior body from the outside in a tire radial direction; and a coupling member which displaceably couples the exterior body and the ring-shaped body, wherein the coupling member includes an elastic coupling plate whose opposite ends are respectively coupled to the exterior body and the ring-shaped body, wherein a plurality of curved portions curved in a tire circumferential direction are formed in the elastic coupling plate in an extending direction in which the elastic coupling plate extends in a tire side view when the non-pneumatic tire is viewed from a tire width direction, and wherein curvature directions of curved portions adjacent to each other in the extending direction are opposite to each other, characterised in that: a size in the tire width direction and a transverse section area of the elastic coupling plate are minimum at only one of a plurality of inflection portions positioned between curved portions adjacent to each other in the extending direction of the elastic coupling plate, wherein the size in the tire width direction and the transverse section area of the elastic coupling plate gradually decrease in the extending direction from opposite sides toward the one inflection portion, and wherein the smallest transverse section area of the elastic coupling plate is provided at the inflection portion on the exterior body side amongst the plurality of inflection portions.

### [Effects of Invention]

According to the non-pneumatic tire of the present invention, it is possible to reduce the weight while a decrease in strength of the coupling member is suppressed.

### [Brief Description of Drawings]

Fig. 1 is a view showing a non-pneumatic tire according to one embodiment of the present invention and is a schematic perspective view in which a part of the non-pneumatic tire is disassembled.
Fig. 2 is a tire side view when the non-pneumatic tire shown in Fig. 1 is viewed from one side in a tire width direction.
Fig. 3 is an enlarged view showing a main portion of Fig. 2.
Fig. 4 is a tire side view when a first part case body is viewed from one side in a tire width direction or a tire side view when a second part case body is viewed from the other side in a tire width direction in the non-pneumatic tire shown in Fig. 1.
Fig. 5 is a view when a first elastic coupling plate or a second elastic coupling plate shown in Fig. 4 is viewed from a tire circumferential direction.
Fig. 6 is a side view when a first elastic coupling plate or a second elastic coupling plate shown in Fig. 5 is viewed from a tire width direction.
Fig. 7 is a view when a first elastic coupling plate or a second elastic coupling plate according to another embodiment is viewed from a tire circumferential direction.

### [Description of Embodiments]

Hereinafter, an embodiment of a non-pneumatic tire according to the present invention will be described with reference to the drawings.

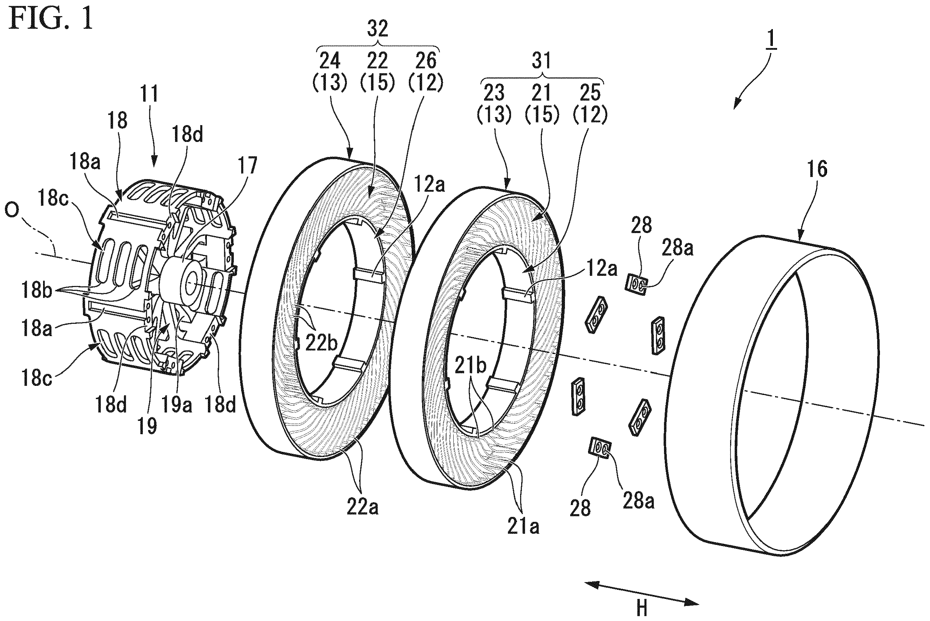

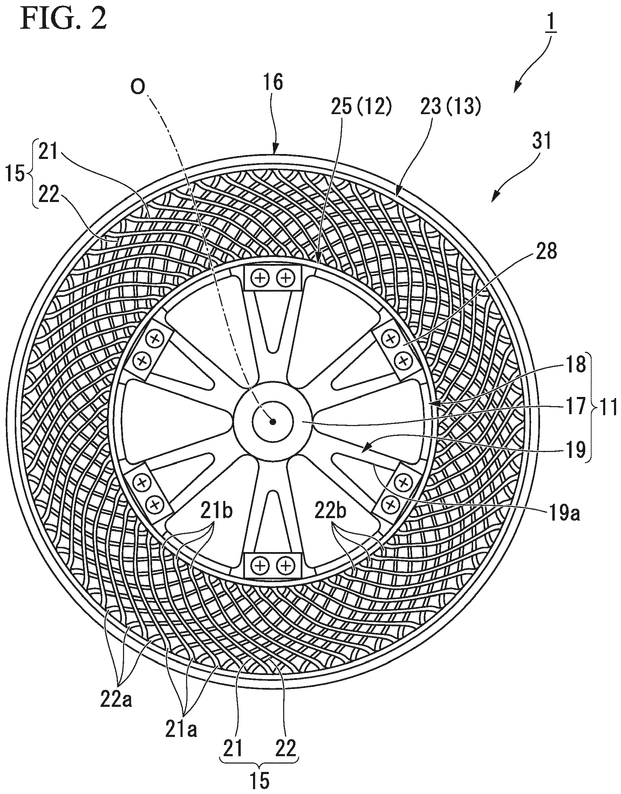

As shown in Figs. 1 and 2, a non-pneumatic tire 1 of the present embodiment includes an attachment body 11 attached to an axle (not shown), a cylindrical ring-shaped body 13 which surrounds the attachment body 11 from the outside in a tire radial direction side, a plurality of coupling members 15 arranged in a tire circumferential direction between the attachment body 11 and the ring-shaped body 13 and configured to couple the attachment body 11 and the ring-shaped body 13 in an elastically relatively displaceable manner, and a cylindrical tread member 16 which externally wraps around the ring-shaped body 13.

Also, the non-pneumatic tire 1 of the present embodiment may be employed in a small-sized vehicle traveling at a low speed such as a handle type electric wheelchair specified in Japanese Industrial Standard JIS T 9208, for example. In addition, the size of the non-pneumatic tire 1 is not particularly limited, and may be in a range of 3.00 to 8 or the like, for example. Also, the non-pneumatic tire 1 may be employed for passenger cars. The size in this case is not particularly limited, and may be 155/65R 13 or the like, for example.

The above-described attachment body 11, the ring-shaped body 13, and the tread member 16 are coaxially arranged on a common axis. Hereinafter, this common axis is defined as an axis O, a direction along the axis O is defined as a tire width direction H, a direction perpendicular to the axis O is defined as a tire radial direction, and a direction of revolving around the axis O is defined as a tire circumferential direction.

Also, a central portion in the tire width direction H of the attachment body 11 and the tread member 16 and a central portion between the two ring-shaped bodies 13 are arranged in a state of being aligned with each other.

A fitting cylinder portion 17 to which a distal end of an axle is fitted, an outer ring portion 18 which surrounds the fitting cylinder portion 17 from the outside in the tire radial direction, and a plurality of ribs 19 which couple the fitting cylinder portion 17 and the outer ring portion 18 are provided in the attachment body 11.

The fitting cylinder portion 17, the outer ring portion 18, and the ribs 19 are integrally formed of a metal material such as an aluminum alloy, for example. The fitting cylinder portion 17 and the outer ring portion 18 are formed in a cylindrical shape and are coaxially arranged on the axis O. The plurality of ribs 19 are disposed at regular intervals in the circumferential direction, for example.

A plurality of key groove portions 18a recessed toward the inside in the tire radial direction and configured to extend in the tire width direction H are formed on an outer circumferential surface of the outer ring portion 18 at intervals in the tire circumferential direction. On the outer circumferential surface of the outer ring portion 18, the key groove portions 18a are open only on one side (outside the vehicle body) in the tire width direction H and are closed on the other side (inside the vehicle body) in the tire width direction H.

In the outer ring portion 18, a plurality of lightening holes 18b penetrating through the outer ring portion 18 in the tire radial direction are formed at intervals in the tire width direction H at portions positioned between key groove portions 18a adjacent to each other in the tire circumferential direction. A plurality of hole rows 18c configured by the plurality of lightening holes 18b are formed at intervals in the tire circumferential direction. Similarly, a lightening hole 19a penetrating through the ribs 19 in the tire width direction H is also formed in each of the ribs 19.

A concave portion 18d into which a plate 28 having a through hole 28a is fitted is formed at a position corresponding to the key groove portions 18a at an end edge on one side in the tire width direction H of the outer ring portion 18. The concave portion 18d is recessed toward the other side in the tire width direction H. Also, on a wall surface facing one side in the tire width direction H among wall surfaces constituting the concave portion 18d, an internal thread portion communicating with the through hole 28a of the plate 28 that is fitted into the concave portion 18d is formed.

Also, a plurality of through holes 28a are formed in the plate 28 at intervals in the tire circumferential direction.

Similarly, a plurality of internal thread portions are formed on the wall surface of the concave portion 18d at intervals in the tire circumferential direction. In the example shown, a case in which two through holes 28a and two internal thread portions are formed is taken as an example, but the number is not limited to two.

A cylindrical exterior body 12 which is externally fitted to the outer ring portion 18 is provided on the attachment body 11. A ridge portion 12a protruding toward the inside in the tire radial direction and extending over the entire length in the tire width direction H is formed on an inner circumferential surface of the exterior body 12. A plurality of ridge portions 12a are formed on the inner circumferential surface of the exterior body 12 at intervals in the tire circumferential direction and respectively engaged with the key groove portions 18a formed on the attachment body 11.

Thus, the exterior body 12 is fixed to the attachment body 11 by screwing bolts (not shown) into the internal thread portions through the through holes 28a of the plate 28 fitted into the concave portion 18d in a state in which the ridge portion 12a is engaged with the key groove portion 18a.

Also, among wall surfaces constituting the key groove portion 18a, a pair of side walls facing each other in the tire circumferential direction are formed to be perpendicular to a bottom wall surface. Similarly, among outer surfaces of the ridge portion 12a, a pair of side wall surfaces erected from the inner circumferential surface of the exterior body 12 and a top wall surface facing the inside in the tire radial direction are formed to be perpendicular to each other. Therefore, the sizes in the tire circumferential direction of the ridge portions 12a and the key groove portion 18a are equal to each other.

With the configuration as above, the ridge portion 12a is precisely engaged with the key groove portion 18a with little rattling.

The coupling member 15 couples an outer circumferential surface of the attachment body 11 and an inner circumferential surface of the ring-shaped bodies 13 in an elastically relatively displaceable manner. In the example shown, the coupling member 15 includes a first elastic coupling plate 21 and a second elastic coupling plate 22 which couple an outer circumferential surface of the exterior body 12 of the attachment body 11 and the inner circumferential surface of the ring-shaped bodies 13. Both of the first elastic coupling plate 21 and the second elastic coupling plate 22 are formed of an elastically deformable plate.

A plurality of first elastic coupling plates 21 are disposed in the tire circumferential direction at positions on one side in the tire width direction H. A plurality of second elastic coupling plates 22 are disposed in the tire circumferential direction at positions on the other side in the tire width direction H. That is, a plurality of first elastic coupling plates 21 and second elastic coupling plates 22 are disposed at intervals from each other in the tire width direction H and are disposed in the tire circumferential direction at respective positions. For example, 60 first elastic coupling plates 21 and second elastic coupling plates 22 may be respectively provided in the tire circumferential direction.

A plurality of coupling members 15 are respectively disposed at positions rotationally symmetrical with respect to the axis O between the exterior body 12 and the ring-shaped bodies 13. Also, all the coupling members 15 have the same shape and the same size, and the width of the coupling members 15 in the tire width direction H is smaller than the width of the ring-shaped body 13 in the tire width direction H.

Therefore, adjacent first elastic coupling plates 21 in the tire circumferential direction are not in contact with each other. Similarly, adjacent second elastic coupling plates 22 in the tire circumferential direction are not in contact with each other. Also, adjacent first elastic coupling plates 21 and second elastic coupling plates 22 in the tire width direction H are not in contact with each other. In addition, the first elastic coupling plates 21 and the second elastic coupling plates 22 have the same width in the tire width direction H and thickness.

Here, the thickness of the first elastic coupling plate 21 and the second elastic coupling plate 22 refers to the thickness in a direction perpendicular to a tangent at an arbitrary point on the elastic coupling plates 21 and 22.

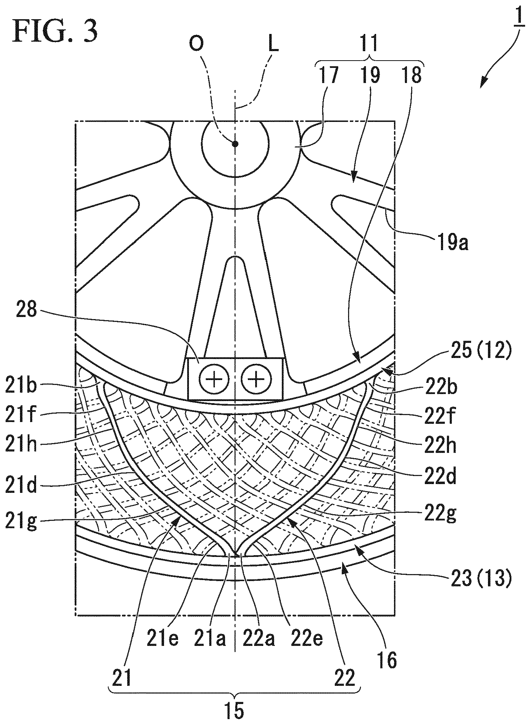

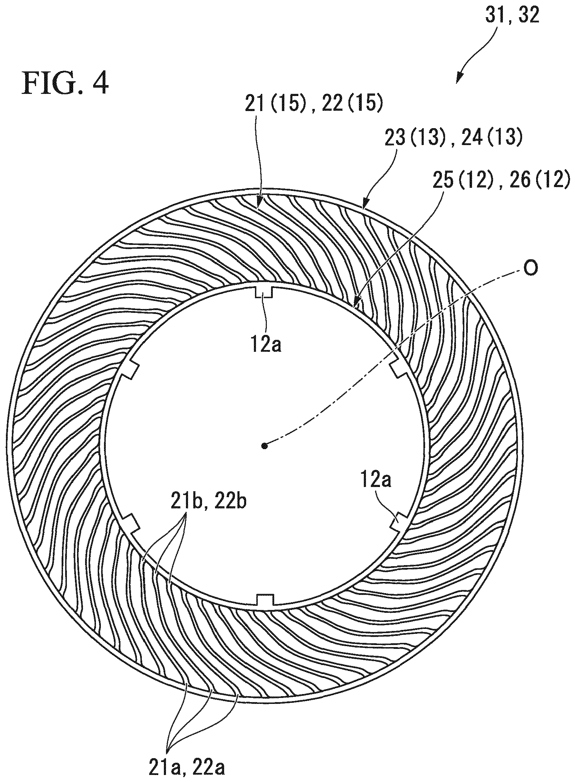

As shown in Figs. 3 and 4, in the first elastic coupling plate 21, one end portion (an outer end portion 21a) coupled to the ring-shaped body 13 is positioned on one side in the tire circumferential direction of the other end portion (an inner end portion 21b) coupled to the exterior body 12. On the other hand, in the second elastic coupling plate 22, one end portion (an outer end portion 22a) coupled to the ring-shaped body 13 is positioned on the other side in the tire circumferential direction of the other end portion (an inner end portion 22b) coupled to the exterior body 12.

Therefore, the respective outer end portions 21a and 22a of the first elastic coupling plate 21 and the second elastic coupling plate 22 which configure one coupling member 15 are coupled to the same position on the inner circumferential surface of the ring-shaped bodies 13 in the tire circumferential direction in a state in which their positions in the tire width direction H are different from each other.

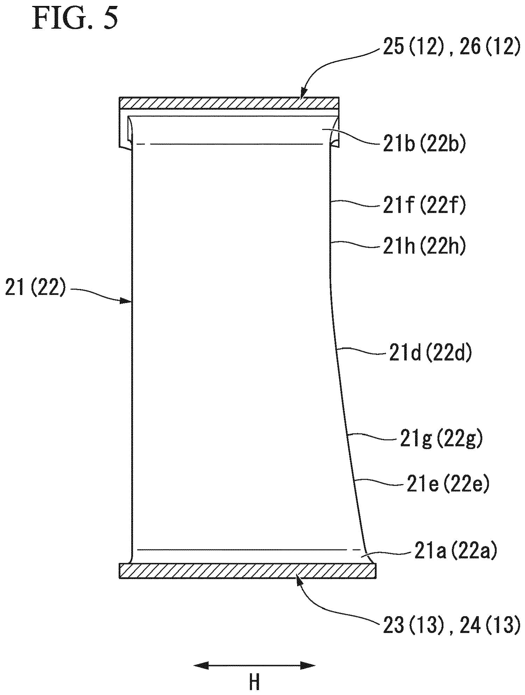

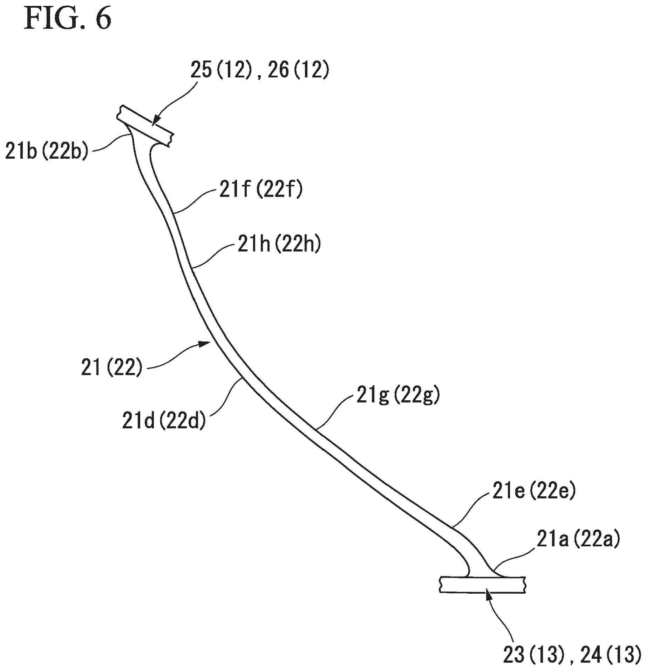

As shown in Figs. 3, 5, and 6, a plurality of curved portions 21d to 21f, and 22d to 22f which are curved in the tire circumferential direction are formed in the first elastic coupling plate 21 and the second elastic coupling plate 22 at intermediate portions positioned between the outer end portions 21a and 22a and the inner end portions 21b and 22b.

The plurality of curved portions 21d to 21f, and 22d to 22f are formed along an extending direction in which the first elastic coupling plate 21 and the second elastic coupling plate 22 extend in a tire side view when the non-pneumatic tire 1 is viewed from the tire width direction H. In the shown example, the plurality of curved portions 21d to 21f in the first elastic coupling plate 21 and the plurality of curved portions 22d to 22f in the second elastic coupling plate 22 are adjacent to each other in the extending direction while having curvature directions opposite to each other.

The plurality of curved portions 21d to 21f formed in the first elastic coupling plate 21 include a first curved portion 21d curved to protrude toward the other side in the tire circumferential direction, a second curved portion 21e positioned between the first curved portion 21d and the outer end portion 21a and curved to protrude toward one side in the tire circumferential direction, and a third curved portion 21f positioned between the first curved portion 21d and the inner end portion 21b and curved to protrude toward one side in the tire circumferential direction. The second curved portion 21e is continuous with the outer end portion 21a.

The plurality of curved portions 22d to 22f formed in the second elastic coupling plate 22 include a first curved portion 22d curved to protrude toward one side in the tire circumferential direction, a second curved portion 22e positioned between the first curved portion 22d and the outer end portion 22a and curved to protrude toward the other side in the tire circumferential direction, and a third curved portion 22f positioned between the first curved portion 22d and the inner end portion 22b and curved to protrude toward the other side in the tire circumferential direction. The second curved portion 22e is continuous with the outer end portion 22a.

In the shown example, the radii of curvature of the first curved portions 21d and 22d in a tire side view are larger than those of the second curved portions 21 e and 22e and the third curved portions 21f and 22f, and the first curved portions 21d and 22d are disposed at central portions in the extending directions of the first elastic coupling plate 21 and the second elastic coupling plate 22.

Lengths of the first elastic coupling plate 21 and the second elastic coupling plate 22 are equal to each other. The inner end portions 21b and 22b of the first elastic coupling plate 21 and the second elastic coupling plate 22 are coupled, in a tire side view, to respective positions at the same distance on one side and the other side in the tire circumferential direction about the axis O on the outer circumferential surface of the exterior body 12 from a position facing the outer end portions 21a and 22a in the tire radial direction.

Also, the first curved portions 21 d and 22d, the second curved portions 21e and 22e, and the third curved portions 21f and 22f in each of the first elastic coupling plate 21 and the second elastic coupling plate 22 have respective protruding directions which are opposite to each other in the tire circumferential direction while they are the same in size.

With the configuration as above, as shown in Fig. 3, a shape of each coupling member 15 in a tire side view is symmetrical with respect to a virtual line L extending in the tire radial direction and passing through the outer end portions 21a and 22a of each of the first elastic coupling plate 21 and the second elastic coupling plate 22.

In addition, inflection portions 21g, 21h, 22g and 22h are formed in the first elastic coupling plate 21 and the second elastic coupling plate 22 at portions positioned between each of the curved portions 21 d to 21f, and 22d to 22f adjacent to each other in the extending direction of the coupling plates 21 and 22.

The inflection portions 21g, 21h, 22g and 22h are respectively positioned between each of the curved portions 21d to 21f and 22d to 22f which are adjacent to each other in the extending direction in the first elastic coupling plate 21 and the second elastic coupling plate 22.

Also, the size in the tire width direction H and the area of a transverse section surface (a transverse section area) perpendicular to the extending direction in the first elastic coupling plate 21 and the second elastic coupling plate 22 are formed to be the minimum at one of the inflection portions 21g, 21h, 22g and 22h. That is, the size or thickness in the tire width direction H and the transverse section area of the elastic coupling plates 21 and 22 are formed to gradually decrease in the extending direction (from the opposite sides) toward one of the inflection portions 21g, 21h, 22g and 22h described above. In the present embodiment, the size in the tire width direction H and the transverse section area are the minimum at the inflection portion 21h (22h) between the curved portions 21d (22d) and 21f (22f).

The above-described exterior body 12, the ring-shaped bodies 13, and the plurality of coupling members 15 are integrally formed of a synthetic resin material, for example. The synthetic resin material may be, for example, a single resin material, a mixture containing two or more kinds of resin material, or a mixture containing one or more kinds of resin material and one or more kinds of elastomer, and furthermore, may include additives such as anti-aging agents, plasticizers, fillers, or pigments, for example.

Incidentally, as shown in Fig. 1, the exterior body 12 is divided into a first exterior body 25 positioned on one side in the tire width direction H and a second exterior body 26 positioned on the other side in the tire width direction H. Similarly, the ring-shaped body 13 is divided into a first ring-shaped body 23 positioned on one side in the tire width direction H and a second ring-shaped body 24 positioned on the other side in the tire width direction H.

In the shown example, each of the exterior body 12 and the ring-shaped body 13 is divided at the central portion in the tire width direction H.

Also, the first exterior body 25 and the first ring-shaped body 23 are integrally formed with the first elastic coupling plate 21, for example, by injection molding. The second exterior body 26 and the second ring-shaped body 24 are integrally formed with the second elastic coupling plate 22, for example, by injection molding. That is, the exterior body 12 to which the coupling member 15 is connected in the attachment body 11, the ring-shaped body 13, and the coupling member 15 are integrally formed of a synthetic resin material.

Hereinafter, a unit in which the first exterior body 25, the first ring-shaped body 23, and the first elastic coupling plate 21 are integrally formed is referred to as a first part case body 31, and a unit in which the second exterior body 26, the second ring-shaped body 24, and the second elastic coupling plate 22 are integrally formed is referred to as a second part case body 32.

Also, when the first part case body 31 is taken as an example, injection molding methods available to be used include a general method of molding the entire first part case body 31 at once, insert molding in which the remaining portions other than insert parts are injection molded with some portion among the first exterior body 25, the first ring-shaped body 23, and the first elastic coupling plate 21 being provided as the insert parts, a so-called two-color molding, or the like. In addition, when the entirety of the first part case body 31 is injection-molded at once, the plurality of ridge portions 12a formed on the exterior body 12 may be a gate portion.

These points apply to the second part case body 32.

Also, at the time of injection-molding, when the first part case body 31 is taken as an example, the first exterior body 25, the first ring-shaped body 23, and the first elastic coupling plate 21 may be formed of different materials, and may be formed of the same material. As such a material, metal materials or resin materials are examples, however, resin materials, particularly thermoplastic resins, are preferable from the perspective of reducing weight.

These points apply to the second part case body 32.

The first ring-shaped body 23 and the second ring-shaped body 24 are coupled to each other, by welding, fusing, bonding end edges thereof facing each other in the tire width direction, or the like, for example. Also, in the case of welding, hot plate welding may be employed, for example. Similarly, end edges of the first exterior body 25 and the second exterior body 26 facing each other in the tire width direction H are in contact with each other.

As shown in Fig. 1, the first art case body 31 and the second part case body 32 have the same shape and the same size. Also, when the first part case body 31 and the second part case body 32 are integrally coupled as described above, end edges of the first ring-shaped body 23 and the second ring-shaped body 24 abut on each other in the tire width direction H and are coupled in a state in which directions of the first part case body 31 and the second part case body 32 are opposite to each other in the tire width direction H while the first part case body 31 and the second part case body 32 are positioned in the tire circumferential direction so that each of the coupling members 15 is line-symmetrical in the tire side view as described above.

Thereafter, the non-pneumatic tire 1 can be obtained by providing the tread member 16 to the first part case body 31 and the second part case body 32 which are integrally combined.

As shown in Fig. 2, the tread member 16 is formed in a cylindrical shape and integrally covers the outer circumferential surface side of the ring-shaped body 13 over the entire region. The tread member 16 is formed of a natural rubber and/or a vulcanized rubber in which the rubber composition is vulcanized, a thermoplastic material, or the like, for example.

As the thermoplastic material, a thermoplastic elastomer, a thermoplastic resin, or the like is an example. As thermoplastic elastomers, amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), a thermoplastic rubber cross-linker (TPV), other thermoplastic elastomers (TPZ), or the like, specified in Japanese Industrial Standard JIS K6418, are examples.

As the thermoplastic resin, urethane resins, olefin resins, vinyl chloride resins, polyamide resins, or the like are examples. Also, it is preferable to form the tread member 16 with a vulcanized rubber from the perspective of wear resistance.

According to the non-pneumatic tire 1 of the present embodiment configured as above, as shown in Figs. 3, 5, and 6, since curvature directions of the curved portions 21d to 21f and 22d to 22f adjacent to each other in the extending direction are opposite to each other in each of the first and second elastic coupling plates 21 and 22 and the inflection portions 21g, 21h, 22g and 22h are hard to be deformed but are chiefly displaced when a compressive load in the tire radial direction is applied to the non-pneumatic tire 1, the load applied to the inflection portions 21g, 21h, 22g and 22h can be suppressed compared to the other portions in each of the first and second elastic coupling plates 21 and 22.

Also, since the size in the tire width direction H and the transverse section area are the minimum at one of the inflection portions 21g, 21h, 22g and 22h (reference signs 21h and 22h for the inflection portion) compared to the size in the tire width direction H and the transverse section area at the other portions other than the one inflection portion 21h and 22h in each of the first and second elastic coupling plates 21 and 22 and gradually decrease in the extending direction from the opposite sides toward the one inflection portion 21h and 22h, and furthermore, there is only one portion (the inflection portion 21h and 22h) in each of the first and second elastic coupling plates 21 and 22, it is possible to secure fluidity at the time of injection molding.

Therefore, the distribution of the materials in each of the first and second elastic coupling plates 21 and 22 can be made uniform and the thickness of the first and second elastic coupling plates 21 and 22 can be reduced, whereby it is possible to effectively reduce the weight.

In addition, the technical scope of the present invention is not limited to the above embodiments, and various changes can be made without departing from the scope of the present invention.

In the present embodiment, the size in the tire width direction H and the transverse section area are configured to be the minimum at the inflection portion 21h (22h) between the curved portions 21d (22d) and 21f (22f).

Also, although the configuration of the coupling member 15 being provided with one of each of the first elastic coupling plate 21 and the second elastic coupling plate 22 has been described in the present embodiment, instead of this, a plurality of first elastic coupling plates 21 and second elastic coupling plates 22 having different positions from each other in the tire width direction H may be provided for one coupling member 15. Also, a plurality of coupling members 15 may be provided between the exterior body 12 and the ring-shaped body 13 in the tire width direction H.

Also, instead of the above-described embodiment, for example, the inner end portions 21b and 22b of the first elastic coupling plate 21 and the second elastic coupling plate 22 may be coupled to each of opposite positions with the axis O therebetween in the tire radial direction on the circumferential surface of the exterior body 12 or may be coupled to positions, on the circumferential surface of the exterior body 12, facing the outer end portions 21a and 22a of the first elastic coupling plate 21 and the second elastic coupling plate 22 in the tire radial direction, or the like. In addition, instead of the above-described embodiment, the outer end portions 21a and 22a of the first elastic coupling plate 21 and the second elastic coupling plate 22 may be coupled to the inner circumferential surface of the ring-shaped body 13 while positions thereof in the tire circumferential direction are made to be different from each other.

Further, in the present embodiment, a gap in the tire width direction H may or may not be provided between the first exterior body 25 and the second exterior body 26. Also, the exterior body 12 and the ring-shaped body 13 may or may not be divided into three or more in the tire width direction H.

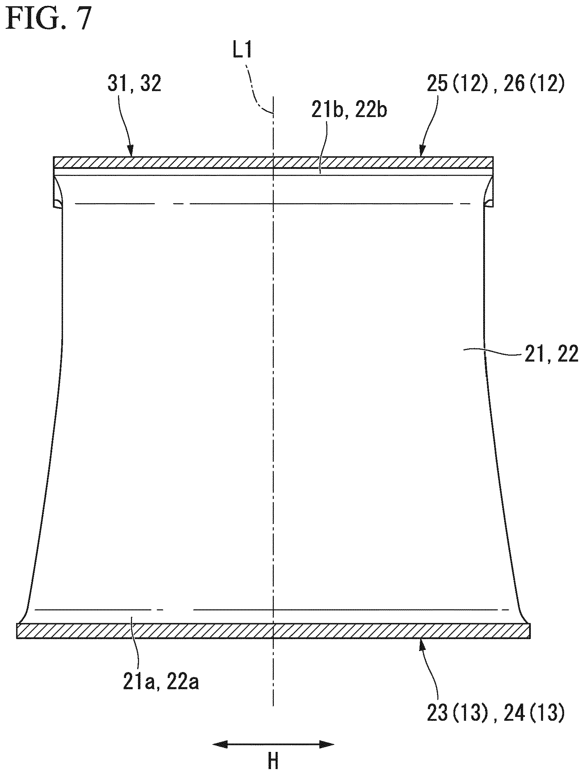

Furthermore, the first exterior body 25 (the first part case body 31) and the second exterior body 26 (the second part case body 32) may be integrally formed as shown in Fig. 7. In this case, the first elastic coupling plate 21 and the second elastic coupling plate 22 are integrally provided and are line-symmetrical with respect to a virtual line L1 passing through each of outer end portions 21a and 22a of the first elastic coupling plate 21 and the second elastic coupling plate 22 in a tire front view when viewed from the tire circumferential direction.

In addition, in the above embodiment, the exterior body 12, the ring-shaped body 13, and the coupling member 15 are integrally formed by injection molding, for example, but the present invention is not limited to injection molding, and they may be integrally formed by casting or the like, for example. Also, the exterior body 12, the ring-shaped body 13, and the coupling member 15 may be individually formed and coupled to each other.

In addition, the above-described embodiment is configured to indirectly couple the coupling member 15 to the outer ring portion 18 of the attachment body 11 with the exterior body 12 interposed therebetween, but the present invention is not limited thereto, and it may be configured to directly couple the coupling member 15 to the outer ring portion 18 of the attachment body 11, for example.

In addition, the components in the above-described embodiments can be appropriately replaced with well-known components without departing from the scope of the present invention.

Next, a verification test was conducted on the operation and effects described above.

The non-pneumatic tire 1 shown in Figs. 1 to 6 was employed as an example, and a non-pneumatic tire in which the size in the tire width direction H in each of the elastic coupling plates 21 and 22 was equivalent to the size in the tire width direction H at the other end portions 21b and 22b over the entire length in the extending direction in the non-pneumatic tire 1 of the example was employed as a comparative example.

The sizes of these non-pneumatic tires were all 155/65R 13.

The two types of non-pneumatic tire were compressed in the tire radial direction, and a compressive force when the coupling member broke was calculated by numerical analysis.

As a result, it was confirmed that the weight of the non-pneumatic tire 1 of the example could be reduced by 15% compared to that of the non-pneumatic tire of the comparative example, and the compressive force of the non-pneumatic tire 1 of the example could be increased by 20% compared with that of the non-pneumatic tire of the comparative example.

### [Industrial Applicability]

According to the present invention, it is possible to reduce the weight while a decrease in strength of the coupling member is suppressed.

### [Reference Signs List]

- 1: Non-pneumatic tire
- 11: Attachment body
- 12: Exterior body
- 13: Ring-shaped body
- 15: Coupling member
- 16: Tread member
- 18: Outer ring portion
- 21: First elastic coupling plate
- 21 d to 21 f: Curved portion
- 21g, 21h: Inflection portion
- 22: Second elastic coupling plate
- 22d to 22f: Curved portion
- 22g, 22h: Inflection portion
- O: Axis

- H: Tire width direction

## Claims

1. A non-pneumatic tire (1) comprising:
an attachment body (11) attached to an axle;
an exterior body (12) which is externally fitted to the attachment body (11);
a ring-shaped body (13) which surrounds the exterior body (12) from the outside in a tire radial direction; and
a coupling member (15) which displaceably couples the exterior body (12) and the ring-shaped body (13),
wherein the coupling member (15) includes an elastic coupling plate (21, 22) whose opposite ends (12b, 12a) are respectively coupled to the exterior body (12) and the ring-shaped body (13),
wherein a plurality of curved portions (21d - 21f, 22d - 22f) curved in a tire circumferential direction are formed in the elastic coupling plate (21, 22) in an extending direction in which the elastic coupling plate (21, 22) extends in a tire side view when the non-pneumatic tire (1) is viewed from a tire width direction (H), and
wherein curvature directions of curved portions (21d - 21f, 22d - 22f) adjacent to each other in the extending direction are opposite to each other,
**characterised in that**:
a size in the tire width direction (H) and a transverse section area of the elastic coupling plate (21, 22) are minimum at only one of a plurality of inflection portions (21g, 21h, 22g, 22h) positioned between curved portions (21d - 21f, 22d - 22f) adjacent to each other in the extending direction of the elastic coupling plate (21, 22),
wherein the size in the tire width direction (H) and the transverse section area of the elastic coupling plate (21, 22) gradually decrease in the extending direction from opposite sides toward the one inflection portion (21g, 21h, 22g, 22h), and
wherein the smallest transverse section area of the elastic coupling plate (21, 22) is provided at the inflection portion (21h, 22h) on the exterior body side amongst the plurality of inflection portions.

## Patentansprüche

1. Luftloser Reifen (1), umfassend:
einen Befestigungskörper (11), der an einer Achse befestigt ist;
einen Außenkörper (12), der extern an den Befestigungskörper (11) angepasst ist;
einen ringförmigen Körper (13), der den Außenkörper (12) von außen in einer Reifenradialrichtung umgibt; und
ein Kopplungselement (15), das den Außenkörper (12) mit dem ringförmigen Körper (13) versetzbar koppelt,
wobei das Kopplungselement (15) eine elastische Kopplungsplatte (21, 22) einschließt, deren entgegengesetzten Enden (12b, 12a) mit dem Außenkörper (12) beziehungsweise dem ringförmigen Körper (13) gekoppelt sind,
wobei eine Vielzahl von gekrümmten Abschnitten (21d - 21f, 22d - 22f), die in eine Reifenumfangsrichtung gekrümmt sind, in der elastischen Kopplungsplatte (21, 22) in einer Ausfahrrichtung gebildet sind, in der die elastische Kopplungsplatte (21, 22) sich in eine Reifenseitenansicht erstreckt, wenn der luftlose Reifen (1) von einer Reifenbreitenrichtung (H) aus gesehen wird, und
wobei Krümmungsrichtungen gekrümmter in der Ausfahrrichtung nebeneinanderliegenden Abschnitte (21d - 21f, 22 - 22f) einander gegenüberliegen,
**dadurch gekennzeichnet, dass**:
eine Größe in der Reifenbreitenrichtung (H) und ein Querschnittsbereich der elastischen Kopplungsplatte (21, 22) an nur einem einer Vielzahl von Beugungsabschnitten (21g, 21h, 22g, 22h), die zwischen gekrümmten in der Ausfahrrichtung der elastischen Kopplungsplatte (21, 22) nebeneinanderliegenden Abschnitten (21d - 21f, 22d - 22f) positioniert sind, am geringsten sind,
wobei die Größe in der Reifenbreitenrichtung (H) und der Querschnittsbereich der elastischen Kopplungsplatte (21, 22) graduell in der Ausfahrrichtung von entgegengesetzten Seiten zu dem einen Beugungsabschnitt (21g, 21h, 22g, 22h) abnehmen und
wobei der kleinste Querschnittsbereich der elastischen Kopplungsplatte (21, 22) an dem Beugungsabschnitt (21h, 22h) an der Außenkörperseite unter der Vielzahl von Beugungsabschnitten bereitgestellt ist.

## Revendications

1. Pneu non pneumatique (1) comprenant:
un corps de fixation (11) fixé à un essieu;
un corps extérieur (12) qui est ajusté extérieurement au corps de fixation (11);
un corps en forme d'anneau (13) qui entoure le corps extérieur (12) de l'extérieur dans une direction radiale du pneumatique; et
un élément de couplage (15) qui couple de manière déplaçable le corps extérieur (12) et le corps en forme d'anneau (13),
dans lequel l'élément de couplage (15) comprend une plaque de couplage élastique (21, 22) dont les extrémités opposées (12b, 12a) sont respectivement couplées au corps extérieur (12) et au corps en forme d'anneau (13),
dans lequel une pluralité de parties incurvées (21d - 21f, 22d - 22f) incurvées dans une direction circonférentielle du pneumatique sont formées dans la plaque de couplage élastique (21, 22) dans une direction d'extension dans laquelle la plaque de couplage élastique (21, 22) s'étend dans une vue latérale du pneu lorsque le pneu non pneumatique (1) est vu dans une direction de largeur de pneu (H), et
dans lequel les directions de courbure des parties courbes (21d - 21f, 22d - 22f) adjacentes les unes aux autres dans la direction d'extension sont opposées les unes aux autres,
**caractérisé en ce que**:
une taille dans le sens de la largeur du pneu (H) et une zone de section transversale de la plaque de couplage élastique (21, 22) sont minimales au niveau d'une seule d'une pluralité de portions d'inflexion (21g, 21h, 22g, 22h) positionnées entre des portions courbes (21d - 21f, 22d - 22f) adjacents les uns aux autres dans la direction d'extension de la plaque de couplage élastique (21, 22),
dans lequel la taille dans le sens de la largeur du pneu (H) et la section transversale de la plaque de couplage élastique (21, 22) diminue progressivement dans la direction d'extension à partir des côtés opposés vers la partie d'inflexion (21g, 21h, 22g, 22h), et
dans lequel la plus petite zone de section transversale de la plaque de couplage élastique (21, 22) est prévue au niveau de la partie d'inflexion (21h, 22h) sur le côté extérieur du corps parmi la pluralité de parties d'inflexion.
